# EUROPÄISCHE PATENTSCHRIFT

(11) **EP 2 837 075 B1**
(45) Veröffentlichungstag und Bekanntmachung des Hinweises auf die Patenterteilung: **26.04.2017**
(21) Anmeldenummer: 12721293.4
(22) Anmeldetag: 16.05.2012
(51) Int. Cl.: H02H 5/04, H01H 71/12, H01H 11/00, H02H 3/08

(54) **VORRICHTUNG ZUM SCHUTZ EINES VERBRAUCHERS**
APPARATUS FOR PROTECTING A LOAD
DISPOSITIF DE PROTECTION D'UN CONSOMMATEUR

(43) Veröffentlichungstag der Anmeldung: 18.02.2015
(73) Patentinhaber: Siemens Aktiengesellschaft, 80333 München (DE)
(72) Erfinder: PFITZNER, Klaus, 92224 Amberg (DE); RÖSCH, Bernhard, 92237 Sulzbach-Rosenberg (DE)
(86) Internationale Anmeldenummer: PCT/EP2012/059097
(87) Internationale Veröffentlichungsnummer: WO 2013/170891

(56) Entgegenhaltungen:
- EP-A1- 1 770 842
- US-A- 3 794 950

## Beschreibung

Die Erfindung betrifft eine Vorrichtung zum Schutz eines Verbrauchers vor einer Überlast, insbesondere einer thermischen Überlast, sowie ein Verfahren der Vorrichtung.

Ein Verbraucher ist insbesondere ein Elektromotor (z.B. Asynchronmotor). Eine thermische Überlast am Verbraucher entsteht durch einen überhöhten Stromfluss. Ein überhöhter Stromfluss kann beispielsweise durch eine mechanische Überlast an einem Elektromotor oder durch einen Ausfall einer oder zweier Strompfade (Phasen) des Elektromotors hervorgerufen werden. Hierbei kommt es zu einer unerwünschten Temperaturentwicklung am Verbraucher, was letztendlich zu einer Beschädigung des Verbrauchers führen kann.

Zur Ermittlung einer anstehenden thermischen Überlast eines elektrischen Verbrauchers werden meist Vorrichtungen in den Strompfad, über welchen der Verbraucher mit elektrischer Energie versorgt wird, integriert, so dass mittels dieser Vorrichtungen eine anstehende thermische Überlast detektiert werden kann. Hierbei kann eine einphasige aber auch eine mehrphasige Überwachung erfolgen, d.h. es kann ein einzelner Strompfad (eine Phase) aber auch mehrere Strompfade (mehrere Phasen) des Verbrauchers überwacht werden.

Die entsprechenden Vorrichtungen weisen je zu überwachenden Strompfad eine Strombahn auf, über welche die über den Strompfad erfolgende Energieversorgung des Verbrauchers geführt wird. Die elektrische Energie des Verbrauchers wird somit mittels der Strombahn durch die Vorrichtung geleitet. Mittels einer Überwachungseinrichtung der Vorrichtung wird der Stromfluss der Strombahn überwacht, so dass eine anstehende Überlast des Verbrauchers detektiert werden kann. Derartige Vorrichtungen sind beispielsweise Überlastrelais oder Leistungsschalter. Ein Leistungsschalter weist für einen nachgeschalteten Verbraucher neben einem Schutz vor einer thermischen Überlast durch einen A-Auslöser ferner einen Kurzschlussschutz durch einen N-Auslöser auf.

Die Vorrichtung der vorliegenden Anmeldung soll insbesondere ein Überlastschutz für einen Verbraucher (z.B. Elektromotoren, Leitungen, Transformatoren und Generatoren) bereitstellen.

An eine Vorrichtung zur Ermittlung einer thermischen Überlast eines Verbrauchers können unterschiedliche Anforderungen gestellt werden:
- Die Vorrichtung soll möglichst sowohl AC- als auch DC-Ströme überwachen können, so dass sowohl AC- als auch DC-Verbraucher auf Überlast überwacht werden können.
- Die Vorrichtung soll einen möglichst großen Einstellbereich aufweisen. Der Einstellbereich ist der Bereich, in welchen eine Überwachung des Betriebsstromes des elektrischen Verbrauchers erfolgen kann. Er wird durch die Betriebsstromobergrenze I_{O} und Betriebsstromuntergrenze I_{U} begrenzt (I_{O} zu I_{U}). Mittels eines Einstellmittels (z.B. Einstellschraube) an der Vorrichtung kann der thermische Überlastauslöser auf den jeweiligen Nennstrom des Verbrauchers eingestellt werden, so dass eine gezielte Überwachung des nachgeschalteten zu überwachenden Verbrauchers erfolgen kann.
- Die Vorrichtung soll eine möglichst geringe Verlustleistung erzeugen.
- Die Vorrichtung soll eine möglichst einfache galvanische Trennung zwischen der zu überwachenden Strombahn und der Überwachungseinrichtung, welche die Überlast detektiert, aufweisen.
- Die Vorrichtung soll ein thermisches Gedächtnis besitzen. D.h. wird eine anstehende thermische Überlast eines Verbrauchers ermittelt, so sollte die Stromzufuhr zum Verbraucher solange unterbrochen werden, bis ein Abkühlen des Verbrauchers sichergestellt ist. Es sollte somit kein sofortiges Zuschalten eines Verbrauchers nach einer ermittelten thermischen Überlast ermöglicht werden.

Bei einer anstehenden thermischen Überlast eines Verbrauchers kommt es in den einzelnen Strompfaden (Phasen) des Verbrauchers zu einem erhöhten Stromanstieg. Eine dem Verbraucher vorgeschaltete Vorrichtung zur Überwachung einer thermischen Überlast des Verbrauchers kann folglich durch eine Überwachung seiner Strombahn diesen erhöhten Stromanstieg detektieren und auswerten. Hierfür können unterschiedliche Messprinzipien angewandt werden. Die Ermittlung einer anstehenden Überlast kann somit mittels unterschiedlicher Überwachungseinrichtungen der Vorrichtung erfolgen. Überwachungseinrichtungen zur Detektion einer Überlast eines Verbrauchers umfassen üblicherweise je zu überwachende Phase des Verbrauchers an der entsprechenden Strombahn einen Bimetallauslöser, einen Stromwandler oder einen Shunt.

Bei einer Überwachung mittels eines Bimetallauslösers wird die zu überwachende Strombahn mit einem Bimetallauslöser derart gekoppelt, dass es durch den Stromanstieg zu einer Erwärmung des Bimetallauslösers und letztendlich zu einer räumlichen Auslenkung eines Teils des Bimetallauslösers kommt. Diese Auslenkung wird detektiert und weiter ausgewertet. Mittels eines Bimetallauslösers können sowohl Gleichströme als auch Wechselströme erfasst werden. Der typische Einstellbereich des Bimetallauslösers liegt bei 1 zu 1,6. Nachteilig am Bimetallauslöser ist, dass er eine hohe Verlustleistung generiert. Das thermische Gedächtnis und die galvanische Trennung zwischen den einzelnen Strompfaden (Phasen) sind bei dem Bimetallauslöser hingegen mit geringem Aufwand zu realisieren.

Bei einer Überwachung mittels eines Stromwandlers ermittelt der jeweilige Stromwandler den Stromfluss seiner Strombahn, so dass eine Auswerteeinheit eine weiterführende Analyse des Stromflusses durchführen kann, und letztendlich eine anstehende Überlast detektieren kann. Nachteilig dieser Messmethode ist, dass keine DC-Ströme erfasst werden können. Der Einstellbereich liegt bei 1 zu 10 und die Verlustleistung ist niedrig. Ein thermisches Gedächtnis kann jedoch durch die Stromwandler selbst nicht nachgebildet werden.

Bei einer Überwachung mittels eines Shunts ist der Shunt in der Strombahn integriert, so dass über diesen ein den Stromfluss charakterisierender Spannungsabgriff erfolgen kann. Durch eine nachgeschaltete Analyse der am Shunt anliegenden Spannung kann eine anstehende thermische Überlast ermittelt werden. Mittels eines Shunt-Messverfahrens ist eine Erfassung von AC/DC-Strömen möglich. Der Einstellbereich liegt üblicherweise bei 1 zu 4. Nachteilig an dem Messverfahren mittels eines Shunts ist, dass durch den Spannungsabgriff am Shunt kein thermisches Gedächtnis nachgebildet wird und die galvanische Trennung der einzelnen Phasen nur mit großem Aufwand möglich ist. EP1770842 und US3794950 offenbaren jeweils eine Vorrichtung zum Schutz eines Verbrauchers vor einer Überlast, wobei in der Vorrichtung eine Überwachungseinheit die Temperatur eines in einer Zuleitung der Energieversorgung des Verbrauchers angeordneten Messwandlers erfasst und durch die Auswertung der erfassten Temperatur eine anstehende Überlast ermitteln kann.

Der Erfindung liegt die Aufgabe zugrunde, eine verbesserte Vorrichtung bereitzustellen mit welcher eine Ermittlung einer anstehenden Überlast eines Verbrauchers erfolgen kann. Insbesondere soll die Vorrichtung hinsichtlich ihrer thermischen Belastungen optimiert ausgebildet sein. Vorzugsweise sollen mittels der Vorrichtung sowohl Gleichströme als auch Wechselströme überwacht werden können. Ebenso soll vorzugsweise eine einfache galvanische Trennung der Überwachungseinrichtung von der zu überwachenden Strombahn ermöglicht werden.

Diese Aufgabe wird gelöst durch eine Vorrichtung gemäß Anspruch 1, sowie durch ein Verfahren nach Anspruch 13. Vorteilhafte Weiterbildungen der Erfindung sind in den abhängigen Ansprüchen 2 bis 12 und 14 angegeben.

Die erste Strombahn ist insbesondere ein Teil einer Zuleitung einer Energieversorgung des Verbrauchers. Die Zuleitung wird ebenso Hauptstrombahn oder Phase genannt. Im aktiven Betrieb des Verbrauchers (z.B. Elektromotor) fließt durch die erste Strombahn und somit durch den Messwandler ein zeitabhängiger Motorstrom, welcher im Messwandler in Abhängigkeit der Stromhöhe und der Stromflusszeit zu einer definierten Erwärmung des Messwandlers (strombedingte Erwärmung) führt. Bei einer anstehenden Überlast des Verbrauchers ist das thermische Verhalten des Messwandlers gegenüber dem thermischen Verhalten im Standardbetrieb des Verbrauchers charakteristisch. Insbesondere liegt bei einer anstehenden Überlast gegenüber dem Standardbetrieb am Messwandler eine erhöhte Temperatur vor. Durch die Temperaturmesseinheit, insbesondere durch einen Temperaturfühler der Temperaturmesseinheit, kann die Temperatur des Messwandlers erfasst und der Auswerteeinheit bereitgestellt werden. Seitens der Auswerteeinheit kann anhand der erfassten Temperaturen der Temperaturmesseinheit das charakteristische Erwärmungsverhalten des Messwandlers ermittelt und ausgewertet werden, so dass hieraus eine anstehende Überlast am Verbraucher erkannt wird.

Durch die Auswerteeinheit erfolgt vorzugsweise eine Analyse der ermittelten Temperatur des Messwandlers über die Zeit, so dass hieraus eine anstehende Überlast am Verbraucher erkannt werden kann. Hierfür wird vorzugsweise das Erwärmungsverhalten des Messwandlers während eines definierten Zeitintervalls ausgewertet.

Unter dem Erwärmungsverhalten des Messwandlers wird insbesondere die zeitliche Veränderung der durch die Temperaturmesseinheit erfassten Temperatur einer Temperaturmessstelle des Messwandlers oder die zeitliche Veränderung einer Temperaturdifferenz zwischen zwei bzw. mehreren Temperaturmessstellen (z.B. Temperaturdifferenz zwischen der Temperatur des Messwandlers und einer Referenztemperatur) verstanden. Durch diese zeitliche Änderung der Temperatur bzw. der Temperaturdifferenz zweier Temperaturmessstellen, also dem Erwärmungsverhalten, kann auf den zeitlichen Stromverlauf geschlossen werden. Anhand dieses zeitlichen Stromverlaufs kann wiederum auf einen Überlastzustand am Verbraucher geschlossen werden.

Vorzugsweise erfolgen die zeitliche Abtastung der Temperaturmessstelle/-n, die eventuelle Temperaturdifferenzbestimmung, die Bestimmung der zeitlichen Temperaturänderung und der Rückschluss auf den zeitlichen Stromverlauf bzw. Überlastzustand in der Auswerteeinheit.

Die Auswerteeinheit versetzt die Vorrichtung bei einer ermittelten Überlast eines Verbrauchers von ihrem Normalzustand in den Überlastzustand. Innerhalb der Vorrichtung ist die erste Strombahn im Normalzustand elektrisch leitend. Im Überlastzustand ist die erste Strombahn innerhalb der Vorrichtung unterbrochen, so dass der Stromfluss über die erste Strombahn verhindert wird.

Ermittelt die Auswerteeinheit eine anstehende Überlast, so wird daraufhin der Abstand zweier sich gegenüberliegender Punkte der zugewandten Seitenflächen des Trägers und des Messwandlers durch das Trennmittel vergrößert. Hierfür steuert die Auswerteeinheit bei einer ermittelten Überlast das Trennmittel mittelbar oder unmittelbar an, so dass daraufhin der Abstand vom Träger zum Messwandler vergrößert wird.

Das Trennmittel vergrößert bei einer durch die Auswerteeinheit ermittelten anstehenden Überlast des Verbrauchers den Abstand eines Bereichs des Messwandlers zu einem Bereich des Trägers. D.h. nach dem Vergrößern des Abstandes des Trägers zum Messwandler ist mindestens ein Beriech des Messwandlers zum Träger weiter beabstandet als vor dem Vergrößern des Abstandes des Trägers zum Messwandler durch das Trennmittel.

Die Bereiche des Messwandlers und des Trägers liegen sich vorzugsweise vor dem Beabstanden parallel gegenüber.

Vorzugsweise liegt der Bereich des Trägers in der dem Messwandler zugewandten Seitenfläche des Trägers und der Bereich des Messwandlers liegt in der dem Träger zugewandten Seitenfläche des Messwandlers.

Das Trennmittel ist somit derart ausgebildet, dass es bei einer durch die Auswerteeinheit ermittelten anstehenden Überlast des Verbrauchers den Abstand des Messwandlers zum Träger vergrößert.

Durch das Vergrößern des Abstandes des Trägers zum Messwandler wird insbesondere der Abstand, welcher zwischen dem Messwandler und dem Träger liegt zumindest bereichsweise vergrößert. Ist der Träger innerhalb der Vorrichtung fest montiert, so kann der Messwandler durch das Trennmittel z.B. einseitig oder vollständig vom Träger abgehoben werden. Ist der Messwandler innerhalb der Vorrichtung fest montiert, so kann der Träger durch das Trennmittel z.B. einseitig oder vollständig vom Messwandler abgehoben werden.

Vorzugsweise ist das Trennmittel mechanisch mit dem Träger und/oder Messwandler verbunden und vollzieht bei seiner Betätigung eine räumliche Auslenkung, so dass der Abstand zwischen dem Messwandler und dem Träger vergrößert wird.

Ein mit der Vorrichtung erzielter Vorteil besteht insbesondere darin, dass mittels der Vorrichtung sowohl AC- als auch DC-Ströme erfasst werden können. Es kann somit eine anstehende Überlast bei AC- und DC-Verbrauchern ermittelt werden. Ferner kann ein gegenüber einem Bimetall-Messverfahren verbesserter Einstellbereich erzielt werden. Durch das Trennmittel wird gezielt eine thermische Beschädigung des Trägers durch den im Überlastfall erhitzten Messwandler verhindert. Dadurch, dass das Trennmittel den Abstand des Trägers zum Messwandler im Überlastfall vergrößert, kann die thermische Belastung durch den Messwandler auf den Träger reduziert werden. Hierdurch kann die Lebensdauer der Vorrichtung verlängert werden.

Vorzugsweise wird der ursprüngliche Abstand des Trägers zum Messwandler (der Abstand des Trägers gegenüber dem Messwandler im Normalzustand) nach einer vorbestimmten Zeit, einer vorbestimmten ermittelten Temperatur durch die Temperaturmesseinheit oder einer Kombination dieser Parameter durch die Vorrichtung, vorzugsweise automatisch, hergestellt, so dass der ursprüngliche Abstand des Trägers zum Messwandler vorliegt. Das Herbeiführen des ursprünglichen Abstandes des Trägers zum Messwandler erfolgt vorzugsweise ebenso durch das Trennmittel.

Ein Vorteil der Analyse der Temperatur des Messwandlers besteht ferner darin, dass mittels des Messwandlers ein thermisches Gedächtnis realisiert werden kann, da bei einer anstehenden Überlast der Messwandler stark erhitzt wird, so dass anhand der Temperatur und somit Abkühlung des Messwandlers ein Abkühlverhalten des Verbrauchers nachvollzogen werden kann. Vorzugsweise wird durch die Auswerteeinheit die Abkühlung des Messwandlers ausgewertet, so dass ein vorzeitiges aktiveren des Verbrauchers verhindert werden kann.

Das Vergrößern des Abstandes zwischen dem Messwandler und dem Träger erfolgt vorzugsweise durch Abheben des Messwandlers vom Träger oder umgekehrt. Das Abheben des Messwandlers vom Träger (oder umgekehrt) kann einseitig aber auch komplett erfolgen. Hierbei wird der Träger vom Messwandler wegbewegt oder aber der Messwandler vom Träger wegbewegt. Das Abheben des Messwandlers vom Träger oder umgekehrt kann z.B. über Federn, eine Vorspannung des Messwandlers, eine Vorspannung des Trägers, Magnetismus, etc. erfolgen.

In einer vorteilhaften Ausführungsform der Erfindung beträgt der durch das Trennmittel herbeigeführte Abstand eines Bereichs des Messwandlers zu einem Bereich des Trägers mindestens 0,5 mm.

Vorzugsweise liegt der durch das Trennmittel herbeigeführte Abstand des Bereichs des Messwandlers zu dem Bereich des Trägers zwischen 0,5 mm und 1 cm.

Der Bereich des Trägers liegt vorzugweise in der dem Messwandler zugewandten Seitenfläche des Trägers und der Bereich des Messwandlers liegt vorzugsweise in der dem Träger zugewandten Seitenfläche des Messwandlers.

Der Abstand des Messwandlers zum Träger ist insbesondere so groß, dass nach einer Auslösung durch Überlast oder Kurzschluss der Träger incl. der darauf befindlichen Komponenten (Temperaturmesseinheit und Auswerteeinheit ect.) nicht geschädigt werden.

In einer weiteren vorteilhaften Ausführungsform der Erfindung betätigt bei einer ermittelten anstehenden Überlast die Auswerteinheit ein Schaltschloss der Vorrichtung, so dass durch die Betätigung des Schaltschlosses ein Stromfluss über die erste Strombahn unterbunden wird.

Die Betätigung des Schaltschlosses kann z.B. elektronisch oder mittels eines mechanischen Auslösers erfolgen.

In einer weiteren vorteilhaften Ausführungsform der Erfindung steht das Schaltschloss mit dem Trennmittel in Wirkverbindung, insbesondere in mechanischer Wirkverbindung, so dass bei einer Betätigung des Schaltschlosses das Trennmittel betätigt wird.

Das Trennmittel wird somit über das Schaltschloss betätigt. Das Trennmittel ist vorzugsweise mechanisch mit dem Schaltschloss verbunden, so dass durch eine räumliche Auslenkung des Schaltschlosses ebenso das Trennmittel betätigt, insbesondere räumlich ausgelenkt, wird, so dass der Abstand eines Bereichs des Trägers zum Messwandler vergrößert wird.

Vorzugsweise wird während des Öffnens des Schaltschlosses gleichzeitig das Trennmittel betätigt, so dass dieses parallel zum Öffnen des Schaltschlosses den Abstand zwischen dem Messwandler und dem Träger vergrößert.

Durch das Öffnen des Schaltschlosses wird der Stromfluss in der ersten Strombahn unterbrochen.

In einer weiteren vorteilhaften Ausführungsform der Erfindung umfasst die Vorrichtung ferner einen Kurzschlussauslöser, wobei das Trennmittel bei einem Auslösen des Kurzschlussauslösers den Abstand des Messwandlers zum Träger vergrößert.

Das Trennmittel wird somit sowohl bei einer ermittelten Überlast durch die Auswerteeinheit als auch bei einem Auslösen des Kurzschlussauslösers betätigt, so dass durch das Trennmittel der Träger vom Messwandler beabstandet wird.

Vorzugsweise steht das Trennmittel mit dem Schaltschloss in Wirkverbindung, so dass bei einem Auslösen des Kurzschlussauslösers das Schaltschloss betätigt wird und hierüber das Trennmittel betätigt wird.

Vorzugsweise kann das Trennmittel ferner durch ein weiteres Organ betätigt werden. Ein weiteres Organ ist beispielsweise eine manuelle Handhabe, welche am äußeren der Vorrichtung angebracht ist. Mittels der manuellen Handhabe kann vorzugsweise das Schaltschloss betätigt werden, so dass hierüber das Trennmittel betätigt wird.

In einer weiteren vorteilhaften Ausführungsform der Erfindung kann die Auswerteeinheit anhand eines Vergleichs des ermittelten Erwärmungsverhaltens des Messwandlers mit einem in der Auswerteeinheit hinterlegten Referenzwert eine anstehende Überlast am Verbraucher ermitteln.

Die Temperaturmesseinheit ist dazu ausgebildet der Auswerteeinheit Temperaturen zu übermitteln, so dass die Auswerteeinheit ein Erwärmungsverhalten des Messwandlers ermitteln kann. Da in der Auswerteeinheit ein Referenzwert hinterlegt ist, kann durch einen Vergleich des ermittelten vorliegenden Erwärmungsverhaltens mit dem Referenzwert ein Rückschluss auf den vorliegenden Betriebszustand des Verbrauchers gewonnen werden (Auswertung). Steht eine Überlast an, so liegt im Vergleich zum Nennbetrieb ein erhöhter Stromfluss und somit eine erhöhte Temperatur vor. Die erhöhte Temperatur führt zu einem charakteristischen Erwärmungsverhalten des Messwandlers, welche durch einen Abgleich mit dem hinterlegten Referenzwert erkannt werden kann.

Durch den Referenzwert wird insbesondere das Erwärmungsverhalten des Messwandlers in Abhängigkeit des Stromflusses durch den Messwandler über die Zeit charakterisiert, so dass eine Überlast am Verbraucher erkannt werden kann. Durch einen Vergleich des ermittelten Erwärmungsverhaltens des Messwandlers mit dem Referenzwert kann somit zwischen einem durch den Nennbetrieb bedingten Erwärmungsverhalten und einem durch eine anstehende Überlast bedingten Erwärmungsverhalten des Messwandlers unterschieden werden. Im Nennbetrieb liegt der Normalzustand vor. Bei einer anstehenden Überlast wir der Überlastzustand herbeigeführt.

In einer weiteren vorteilhaften Ausführungsform der Erfindung umfasst die Temperaturmesseinheit einen ersten Temperaturfühler zum Erfassen der Temperatur des Messwandlers.

Der erste Temperaturfühler kann insbesondere eine Temperatur an einer ersten Messstelle des Messwandlers erfassen und der Auswerteeinheit bereitstellen. Der erste Temperaturfühler ist vorzugsweise auf der dem Messwandler abgewandten Seitenfläche des Trägers angeordnet.

In einer weiteren vorteilhaften Ausführungsform der Erfindung umfasst die Temperaturmesseinheit ferner einen zweiten Temperaturfühler, wobei der zweite Temperaturfühler eine Referenztemperatur erfassen kann, wobei die Auswerteeinheit eine anstehende Überlast am Verbraucher mittels erfassten Temperaturen des ersten und zweiten Temperaturfühlers ermitteln kann.

Die Referenztemperatur kann z.B. dezentral zum Messwandler innerhalb der Vorrichtung ermittelt werden; d.h. die Temperatur des Messwandlers wird nicht durch den zweiten Temperaturfühler erfasst. Die Auswerteeinheit kann somit das Erwärmungsverhalten des Messwandlers mittels erfasster Temperaturen des Messwandlers durch den ersten Temperaturfühler und erfasster Referenztemperaturen des zweiten Temperaturfühlers ermitteln und auswerten.

Es ist jedoch ebenso denkbar, dass als Referenztemperatur eine Temperatur an einer Temperaturmessstelle des Messwandlers erfasst wird, welche nicht durch den ersten Temperaturfühler erfasst wird. Ist die Referenztemperatur des zweiten Temperaturfühlers eine Temperatur des Messwandlers, so ist der zweite Temperaturfühler derart auf dem Träger angeordnet, dass er eine Temperatur einer Messstelle des Messwandlers erfassen kann.

Durch einen Abgleich einer erfassten Temperatur des Messwandlers mit einer vorzugsweise zeitgleich erfassten Referenztemperatur in der Auswerteinheit können externe Temperatureinflüsse als Fehlerursache weitestgehend ausgeschlossen werden. Durch die Auswerteeinheit kann somit ein ausschließlich strombedingtes, eine Überlast am Verbraucher charakterisierendes Erwärmungsverhalten des Messwandlers ermittelt werden.

Bei einer anstehenden Überlast des Verbrauchers liegt gegenüber dem Nennbetrieb des Verbrauchers am Messwandler ein erhöhter Stromfluss und somit eine erhöhte Temperatur vor. Der erste Temperaturfühler detektiert somit eine strombedingte erhöhte Temperatur. Durch den zweiten Temperaturfühler wird als Referenztemperatur z.B. eine Temperatur in der Vorrichtung ermittelt, so dass durch einen Vergleich der Temperatur des ersten Temperaturfühlers mit der Referenztemperatur des zweiten Temperaturfühlers das strombedingte Erwärmungsverhalten des Messwandlers ermittelt werden kann. Auf diese Weise kann ausgeschlossen werden, dass es sich bei dem ermittelten Erwärmungsverhalten des Messwandlers nicht um einen Erwärmung des Messwandlers durch einen Anstieg der Umgebungstemperatur bei der Vorrichtung handelt sondern um eine strombedingte Erwärmung am Messwandler.

Die Erfassung der Temperatur am ersten und zweiten Temperaturfühler erfolgt vorzugsweise zeitgleich.

In einer weiteren vorteilhaften Ausführungsform der Erfindung umfasst die Temperaturmesseinheit einen dritten Temperaturfühler, wobei der erste und dritte Temperaturfühler der ersten Temperaturmesseinheit gleichzeitig jeweils eine Temperatur des Messwandlers erfassen kann, wobei die Auswerteeinheit anhand der erfassten Temperaturen der Temperaturmesseinheit eine anstehende Überlast am Verbraucher ermitteln kann.

In einer weiteren vorteilhaften Ausführungsform der Erfindung umfasst die Temperaturmesseinheit einen ersten, zweiten und dritten Temperaturfühler, wobei der erste, zweite und dritte Temperaturfühler derart zum Messwandler angeordnet ist, dass der erste Temperaturfühler eine Temperatur an einem ersten Messpunkt des Messwandlers, der zweite Temperaturfühler eine Temperatur an einem zweiten Messpunkt des Messwandlers und der dritte Temperaturfühler eine Temperatur an einem dritten Messpunkt des Messwandlers erfassen kann, wobei in Bezug zu einer ersten Seitenfläche des Messwandlers der zweite Messpunkt zwischen dem ersten und dritten Messpunkt auf der ersten Seitenfläche des Messwandlers liegt.

In Bezug zu der zweiten Seitenfläche des Trägers ist der zweite Temperaturfühler zwischen dem ersten und dritten Temperaturfühler angeordnet. Vorzugsweise liegt die erste Seitenfläche des Messwandlers der ersten Seitenfläche des Trägers parallel gegenüber.

In einer weiteren vorteilhaften Ausführungsform der Erfindung ist mindestens ein Temperaturfühler der Temperaturmesseinheit maximal 2 mm von dem Messwandler beabstandet.

In einer weiteren vorteilhaften Ausführungsform der Erfindung ist der Messwandler ein Widerstand mit einer definierten Erwärmungskurve. Vorzugsweise weist der Messwandler eine konstante Verlustleistung und eine charakteristische Erwärmungskurve auf. Der Messwandler ist vorzugsweise ein Shunt.

Der Auswerteeinheit liegt vorzugsweise ein Teil der Erwärmungskurve des Messwandlers als Referenzwert vor, so dass sie durch einen Abgleich des ermittelten Erwärmungsverhaltens mit dem Referenzwert eine anstehende Überlast erkennen kann. Bei dem Abgleich mit dem Referenzwert wird vorzugsweise das Erwärmungsverhalten des Messwandlers während eines definiertes Zeitintervalls betrachtet. Es werden somit die ermittelten Temperaturen des Messwandlers durch die Temperaturmesseinheit während eines definiertes Zeitintervall analysiert.

In einer weiteren vorteilhaften Ausführungsform der Erfindung ist die Überwachungseinrichtung derart ausgebildet, dass zur Ermittlung des Erwärmungsverhaltens des Messwandlers die Temperatur des Messwandlers wiederholt in einem fest definierten Zeitintervall erfasst und ausgewertet wird.

In einer weiteren vorteilhaften Ausführungsform der Erfindung umfasst die Vorrichtung ferner eine zweite Strombahn, welche eine erste und eine zweite Leitung umfasst, wobei die Überwachungseinrichtung ferner eine zweite Temperaturmesseinheit und einen zweiten Messwandler, welcher eine elektrisch leitende Verbindung zwischen der ersten und der zweiten Leitung der zweiten Strombahn herstellt, umfasst, wobei die zweite Temperaturmesseinheit auf dem Träger galvanisch getrennt von dem zweiten Messwandler angeordnet ist und eine Temperatur des zweiten Messwandlers erfassen kann, wobei die Auswerteeinheit mittels erfassten Temperaturen der zweiten Temperaturmesseinheit ein zeitliches Erwärmungsverhalten des zweiten Messwandlers ermitteln kann und durch eine Auswertung des ermittelten zeitlichen Erwärmungsverhaltens des zweiten Messwandlers eine anstehende Überlast am Verbraucher ermitteln kann, wobei das Trennmittel bei einer durch die Auswerteeinheit ermittelten anstehenden Überlast des Verbrauchers den Abstand des zweiten und vorzugsweise ebenso ersten Messwandlers zum Träger vergrößert.

Der Träger umfasst somit mindestens einen Temperaturfühler je Temperaturmesseinheit.

Die zweite Strombahn wird vorzugsweise analog zur ersten oder zweiten Strombahn überwacht, wobei gleiche Komponenten der Vorrichtung, sofern möglich, für beide Strombahnen genutzt werden. Es kann z.B. die Auswerteeinheit, der Träger und/oder das Trennmittel gemeinsam genutzt werden.

Es ist ebenso denkbar, dass zur Überwachung der zweiten Strombahn ein analoges System der ersten Strombahn genutzt wird, ohne dass gleiche Komponenten gemeinsam genutzt werden.

Liegt ein dreiphasiges System vor, so umfasst die Vorrichtung vorzugsweise eine dritte Strombahn, welche analog zur ersten Strombahn aufgebaut und überwacht wird. D.h. die dritte Strombahn umfasst einen dritten Messwandler, dessen zeitliches Erwärmungsverhalten durch eine dritte Temperaturmesseinheit ermittelt und durch die Auswerteeinheit ausgewertet werden kann.

In einer weiteren vorteilhaften Ausführungsform der Erfindung sind die Auswerteeinheit und/oder die Temperaturfühler der Temperaturmesseinheit/-en auf dem Träger montiert.

In einer weiteren vorteilhaften Ausführungsform der Erfindung ist der jeweilige Temperaturfühler derart ausgebildet, dass er in Abhängigkeit der vorliegenden Temperatur einen charakteristischen elektrischen Zustand einnimmt. Der Temperaturfühler ist insbesondere ein Thermoelement (z.B. Thermodraht), ein temperaturabhängiger Halbleiter (z.B. Diode, Kaltleiter) oder ein Widerstandsthermometer (z.B. PT100, PT1000).

Wird beispielsweise eine Diode als Temperaturfühler verwendet, so kann anhand einer Messung der Spannung an der Diode ein Rückschluss auf die vorliegende Temperatur gewonnen werden. Eine Temperaturänderung des Messwandlers würde folglich zu einer Temperaturänderung an der Diode führen, welche zu einer Spannungsänderung führt.

In einer weiteren vorteilhaften Ausführungsform der Erfindung ist die Vorrichtung dezentral vom Verbraucher angeordnet, d.h. sie ist kein Bestandteil des Verbrauchers.

In einer weiteren vorteilhaften Ausführungsform der Erfindung umfasst der Messwandler das Material Kohlenstoff, insbesondere Graphit.

In einer weiteren vorteilhaften Ausführungsform der Erfindung ist spätestens 1 Sekunde nach einer durch die Auswerteeinheit ermittelten Überlast durch das Trennmittel der vergrößerte Abstand des Trägers zum Messwandler hergestellt.

Die Betätigung des Trennmittels erfolgt vollständig automatisch durch die Vorrichtung selbst.

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung einer Vorrichtung zum Schutz eines elektrischen Verbrauchers,
- FIG 2: eine schematische Darstellung einer Ausführungsform einer Überwachungseinrichtung einer Vorrichtung gemäß der FIG 1 im Normalzustand,
- FIG 3: eine schematische Darstellung der Überwachungseinrichtung der FIG 2 im Überlastzustand,
- FIG 4: eine schematische Darstellung einer alternativen Ausführungsform einer Überwachungseinrichtung einer Vorrichtung gemäß der FIG 1 im Normalzustand, und
- FIG 5: eine schematische Darstellung der Überwachungseinrichtung der FIG 4 im Überlastzustand.

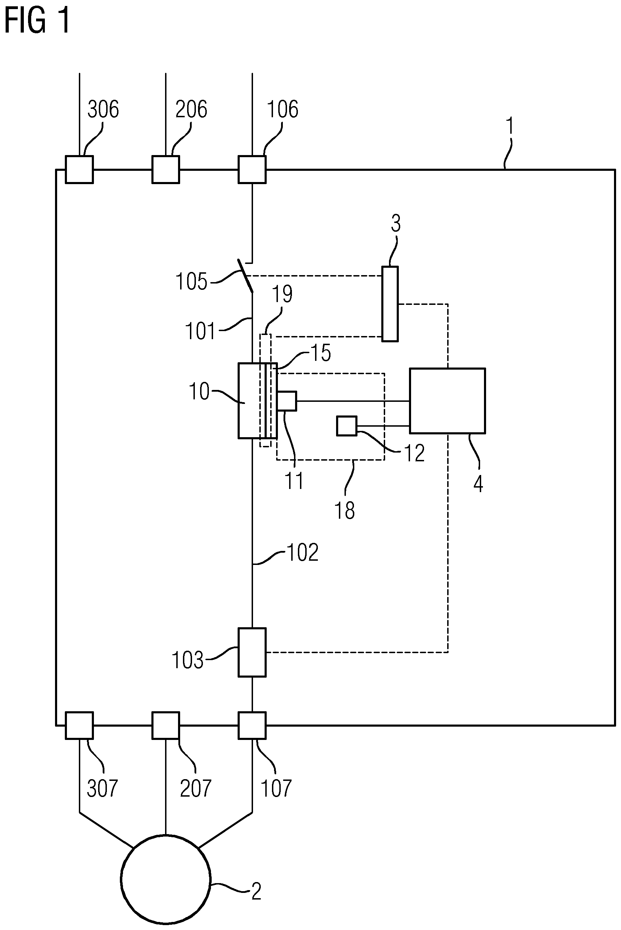

FIG 1 zeigt eine schematische Darstellung einer Vorrichtung 1 zum Schutz eines elektrischen Verbrauchers 2. Die Vorrichtung 1 ist in diesem Ausführungsbeispiel ein Leistungsschalter 1, mit welchem ein Verbraucher 2, nämlich ein dreiphasiger elektrischer Motor 2, überwacht werden kann. Der Leistungsschalter 1 ist hierfür in den Versorgungsstrang des Verbrauchers 2 zwischengeschaltet, so dass mittels des Leistungsschalters 1 die drei Phasen des Verbrauchers 2 überwacht werden können.

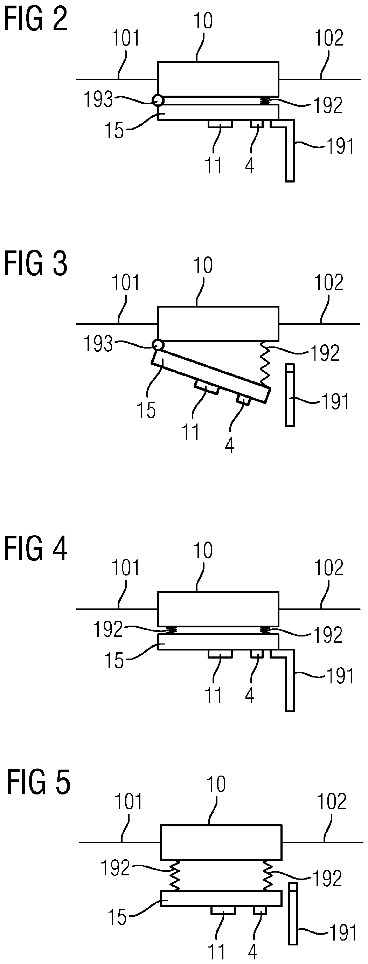

Damit der Leistungsschalter 1 in den Versorgungsstrang des elektrischen Verbrauchers 2 integriert werden kann, weist er eingangsseitige Anschlussvorrichtungen 106, 206, 306 und ausgangsseitige Anschlussvorrichtungen 107, 207, 307 auf. In dem Leistungsschalter 1 werden die einzelnen Phasen des Verbrauchers 2 galvanisch getrennt geführt. Die erste Phase des Verbrauchers wird über die erste Strombahn, welche zwischen der ersten eingangseitigen Anschlussvorrichtung 106 und der ersten ausgangsseitigen Anschlussvorrichtung 107 liegt, geführt und überwacht. Die zweite Phase des Verbrauchers wird über die zweite Strombahn, welche zwischen der zweiten eingangseitigen Anschlussvorrichtung 206 und der zweiten ausgangsseitigen Anschlussvorrichtung 207 liegt, geführt und überwacht. Die dritte Phase des Verbrauchers wird über die dritte Strombahn, welche zwischen der dritten eingangseitigen Anschlussvorrichtung 306 und der dritten ausgangsseitigen Anschlussvorrichtung 307 liegt, geführt und überwacht. Aus Gründen der Übersicht, wird in der FIG 2 lediglich die erste Strombahn der Vorrichtung 1 mit ihrer Überwachungseinrichtung dargestellt und genauer beschrieben.

Die erste Strombahn umfasst eine erste Leitung 101, eine zweite Leitung 102, ein Schaltelement 105, einen Messwandler 10 und einen Kurzschlussauslöser 103. Zur Überwachung der ersten Strombahn umfasst die Vorrichtung eine Auswerteeinheit 4, ein Schaltschloss 3, eine Temperaturmesseinheit 18 mit einem ersten und einen zweiten Temperaturfühler 11, 12, einen Träger 15 und ein Trennmittel 19.

Über das Schaltelement 105 der ersten Strombahn kann für die erste Phase der Energiefluss zum Verbraucher 2 unterbrochen werden. Die Ansteuerung des Schaltelements 105 erfolgt über das Schaltschloss 3 der Vorrichtung. Das Schaltschloss 3 ist mit der Auswerteeinheit 4 und hierüber mit dem Kurzschlussauslöser 103 der ersten Strombahn verbunden.

Mittels des Kurzschlussauslösers 103 der ersten Strombahn kann ein auftretender Kurzschluss in der ersten Strombahn und somit in einer Phase des Verbrauchers 2 detektiert werden, so dass bei einer Detektion eines Kurzschlusses die Energiezufuhr zum Verbraucher 2 unterbunden werden kann. Hierfür wird von dem Kurzschlussauslöser 103 ein entsprechendes Signal an das Schaltschloss 3 ausgegeben, so dass dieses das Schaltelement 105 der ersten Strombahn öffnet.

Mittels der Überwachungsvorrichtung kann der Leistungsschalter 1 eine anstehende Überlast des elektrischen Verbrauchers 2 detektieren. Hierfür ist zwischen der ersten und zweiten Leitung 101, 102 der ersten Strombahn der Messwandler 10 angeordnet. Der Messwandler 10 ist ein metallischer, elektrischer Widerstand mit temperaturunabhängigen Eigenschaften. In Abhängigkeit der vorliegenden Stromhöhe und Stromflusszeit in der ersten Strombahn liegt eine definierte Erwärmung des Messwandlers 10 vor.

Die Temperatur des Messwandlers 10 kann mittels des ersten Temperaturfühlers 11 der Temperaturmesseinheit erfasst werden. Die erfasste Temperatur am ersten Temperaturfühler 11 der Temperaturmesseinheit wird der Auswerteeinheit 4 bereitgestellt. Der erste Temperaturfühler 11 der ersten Temperaturmesseinheit ist galvanisch von dem Messwandler 10 getrennt und auf der dem Messwandler 10 abgewandten Seitenfläche des Trägers 15 befestigt. Der Träger 15 ist unmittelbar zum Messwandler 10 angeordnet, so dass der erste Temperaturfühler 11 die Temperatur des Messwandlers 10 ermitteln kann.

Mittels des zweiten Temperaturfühlers 12 der Temperaturmesseinheit wird eine Referenztemperatur innerhalb des Leistungsschalters 1 gemessen und der Auswerteeinheit 4 bereitgestellt. Der erste Temperaturfühler 11 erfasst die Temperatur an einem anderen Messpunkt als der zweite Temperaturfühler 12, so dass im aktiven Betrieb des Verbrauchers 2 eine strombedingte Erwärmung des Messwandlers 10 durch zeitgleiche Erfassungen der Temperaturen des ersten und zweiten Temperaturfühlers 11, 12 ermittelt werden kann. Durch eine Auswertung der erfassten Temperaturen des ersten und zweiten Temperaturfühlers 11, 12 kann die Auswerteeinheit 4 ein Erwärmungsverhalten am Messwandler 10 ermitteln und auswerten. Durch den zusätzlichen Abgleich der Temperatur des ersten Temperaturfühlers 11 mit der Referenztemperatur des zweiten Temperaturfühlers 12 kann die Analyse der ermittelten Temperatur des Messwandlers 10 auf die strombedingte Erwärmung des Messwandlers 10 reduziert werden. Mittels der ermittelten strombedingten Erwärmung des Messwandlers 10 kann folglich ein Rückschluss auf den vorliegenden Stromfluss in der ersten Strombahn und somit ein Rückschluss auf den vorliegenden Betriebszustand des Verbrauchers 2 gewonnen werden, da bei einer anstehenden Überlast ein erhöhter Stromfluss in den einzelnen Phasen des Verbrauchers 2 vorliegt.

Der Auswerteeinheit 4 (z. B: ein Mikrocontroller) ist die Erwärmungscharakteristik des Messwandlers 10 bekannt und als Referenzwert hinterlegt. Die Auswerteeinheit 4 kann folglich durch einen Vergleich des strombedingten Erwärmungsverhaltens des Messwandlers 10 insbesondere während eines definierten Zeitintervalls, mit dem Referenzwert eine anstehende Überlast des elektrischen Verbrauchers 2 ermittelt und entsprechende Gegenmaßnahmen einleiten. Das Zeitintervall in welchem die Analyse des Erwärmungsverhaltens des Messwandlers 10 erfolgt, wird vorzugsweise in Abhängigkeit der vorliegenden Temperatur des Messwandlers 10 gewählt. Bei einer ermittelten anstehenden Überlast des Verbrauchers 2 gibt die Auswerteeinheit 4 ein Warnsignal an das Schaltschloss 3 aus, so dass das Schaltelement 105 geöffnet wird und somit der Energiefluss zum Verbraucher 2 unterbunden wird. Auf diese Weise kann eine thermische Beschädigung des Verbrauchers 2 durch eine Überlast vermieden werden.

Dadurch, dass eine thermische Überlast des Verbrauchers 2 durch eine Auswertung des Erwärmungsverhaltens des Messwandlers 10 ermittelt wird, liegt ebenso ein thermisches Gedächtnis durch den Messwandler 10 vor. Erst nachdem der Messwandler 10 eine definierte Abkühlung erfahren hat, kann das Schaltelement 105 geschlossen werden, so dass der Verbraucher 2 erneut an das Versorgungsnetz geschaltet wird und wieder mit Strom versorgt wird. Die Ermittlung der notwendigen Abkühlung des Verbrauchers 2 erfolgt durch eine Analyse der Temperatur des Messwandlers 10 mittels des Temperaturfühlers 11 und der Auswerteeinheit 4. Hierfür liegt der Auswerteeinheit 4 ebenso ein Referenzwert vor.

Die Vorrichtung 1 zur Überwachung einer thermischen Überlast eines Verbrauchers 2 wurde in FIG 1 beispielhaft anhand eines Leistungsschalters 1 beschrieben. Ebenso kann die Vorrichtung 1 z.B. ein Überlastrelais sein. In diesem Fall wären der Kurzschlussauslöser 103 sowie gegebenenfalls das Schaltschloss 3 und dessen anzusteuerndes Schaltelement 105 nicht vorhanden.

Die Temperaturfühler 11, 12 sind jeweils Halbleiter, insbesondere Dioden, so dass mittels einer Analyse deren Spannung die Temperatur am Temperaturfühler 11, 12 ermittelt werden kann. Zur Steigerung der Messgenauigkeit können ebenso mehrere Temperaturfühler an dem Messwandler 10 platziert werden. Ebenso ist es denkbar, dass der zweite Temperaturfühler 12 außerhalb der Vorrichtung 1 platziert ist.

Als Verbraucher 2 kann ebenso eine Leitung gesehen werden, bei welcher ein Schutz vor einer thermischen Überlast sichergestellt werden muss.

Ein großer Vorteil der Vorrichtung 1 und insbesondere der Überwachungseinrichtung besteht darin, dass eine sichere galvanische Trennung zwischen den einzelnen Phasen (Strombahnen) sowie zwischen den Temperaturfühlern 11,12 zu den Strombahnen ermöglicht wird.

Der Messwandler 10 weist üblicherweise bei Nennbetrieb des Verbrauchers 2 eine Temperatur von ca. 60-100°C auf. Bei einem Kurzschluss in einer Strombahn können hingegen für einige Millisekunden maximal Temperaturen von bis zu 500°C am Messwandler 10 entstehen. Diese Höchsttemperatur kühlt sich, in den ersten 10 Millisekunden bis 20 Millisekunden, rasch ab. Danach klingt die Temperatur bei einem Level von ca. 200 bis 250°C langsam für einige Minuten ab. Bei einem Überlastfall können für einige Sekunden Temperatur von bis zu 300°C am Messwandler 10 vorliegen. Auch diese Temperaturen klingen für einige Minuten langsam ab.

Dadurch, dass das Trennmittel 19 derart ausgebildet ist, dass es bei einer durch die Auswerteeinheit 4 ermittelten anstehenden Überlast des Verbrauchers 2 oder bei einem durch die Vorrichtung 1 ermittelten Kurzschluss den Abstand des Messwandlers 10 zum Träger 15 vergrößert, kann eine thermische Beschädigung des Trägers 15 und insbesondere der auf dem Träger 15 montierten Komponenten (z.B. erster Temperaturfühler 11, Auswerteeinheit 4) verhindert werden. Sobald die Vorrichtung 1 eine anstehende thermische Überlast oder einen Kurzschluss ermittelt, wird das Schaltschloss 3 der Vorrichtung 1 angesteuert. Das Schaltschloss 3 öffnet das Schaltelement 105 der Strombahn, so dass der Stromfluss über die Strombahn zum Verbraucher 2 unterbunden ist.

Das Trennmittel 19 ist mit dem Schaltschloss 3 derart gekoppelt, dass es bei einer Betätigung des Schaltschlosses 3 ebenso betätigt wird. Durch die Betätigung des Trennmittels 19 erfolgt eine räumliche Beabstandung des Trägers 15 zum Messwandler 10. Hierfür kann der Träger 15 einseitig oder vollständig vom Messwandler 10 beabstandet werden. Ebenso ist es denkbar, dass der Messwandler 10 vom Träger 15 abgehoben wird, so dass der Abstand des Messwandlers 10 zum Träger 15 vergrößert ist.

Das Herbeiführen des Abstandes des Messwandlers 10 zum Träger 15 durch das Trennmittel 19 kann mechanisch (z.B. mittels Federn), magnetisch oder elektromechanisch erfolgen.

Das Trennmittel 19 ist beispielsweise mit dem Schaltschloss 3 und dem Träger 15 mechanisch gekoppelt. Durch eine Betätigung des Schaltschlosses 3 wird dieses räumlich ausgelenkt und lenkt durch die mechanische Kopplung mit dem Trennmittel 19 ebenso das Trennmittel 19 räumlich aus. Durch die räumliche Auslenkung des Trennmittels 19 wird ein Teil des Trägers 15 freigegeben, so dass der Träger 15 durch eine Feder, welche den Träger 15 mit einer Kraft beaufschlagt, vom Messwandler 10 weggedrückt wird, so dass der Abstand zwischen dem Träger 15 und dem Messwandler 10 vergrößert wird.

Das Trennmittel 19 ist vorzugsweise mit dem Schaltschloss 3 und dem Träger 15 derart mechanisch gekoppelt, dass es vor dem Schließen des Schaltelements 105 erneut den ursprünglichen Abstand vor dem Beabstanden des Trägers 15 vom Messwandler 10 herstellt.

Da es sich bei dem dargestellten Verbraucher 2 um einen dreiphasigen Verbraucher 2 handelt, wird bei einer ermittelten anstehenden thermischen Überlast oder einem Kurzschluss durch das Schaltschloss 3 jeweils das Schaltelement 105 der drei Strombahnen angesteuert, so dass der Stromfluss auf den drei Strombahnen unterbunden ist. Der Aufbau der zweiten und dritten Strombahn der Vorrichtung ist analog zur ersten Strombahn aufgebaut, wobei der Träger 15, die Auswerteeinheit 4, das Trennmittel 19, das Schaltschloss 3 sowie der zweite Temperaturfühler 12 innerhalb der Vorrichtung 1 gemeinsam genutzt werden. Es ist jedoch ebenso denkbar, diese Komponenten bzw. Teile davon, separat für die jeweilige Strombahn ausgebildet sind.

Die Figuren 2 und 3 zeigen eine schematische Darstellung einer Ausführungsform einer Überwachungseinrichtung einer Vorrichtung gemäß der FIG 1. Die Figuren 4 und 5 zeigen eine schematische Darstellung einer alternativen Ausführungsform einer Überwachungseinrichtung einer Vorrichtung gemäß der FIG 1.

Die Figuren 2 und 4 zeigen die Überwachungseinrichtung im Normalzustand/Normalbetrieb, d.h. die Strombahn zwischen der eingangsseitigen Anschlussvorrichtungen und der ausgangsseitigen Anschlussvorrichtungen ist elektrisch leitend miteinander verbunden und der Träger 15 ist vom Messwandler 10 normal beabstandet.

Die Figuren 3 und 5 zeigen die Überwachungseinrichtung im Überlastzustand, d.h. eine anstehende thermische Überlast wurde durch die Auswerteeinheit ermittelt oder ein Kurzschluss wurde durch den Kurzschlussauslöser ermittelt. Die Strombahn zwischen der eingangsseitigen Anschlussvorrichtungen und der ausgangsseitigen Anschlussvorrichtungen wurde daher durch das zugehörige Schaltelement geöffnet, so dass der Stromfluss über die Strombahn verhindert wird. Ferner wurde mittels des Trennmittels der Anstand des Trägers 15 zum Messwandler 10 im Vergleich zum Normalzustand vergrößert.

Die Überwachungseinrichtung umfasst eine Temperaturmesseinheit, einen Träger 15, eine Auswerteeinheit 4, ein Trennmittel und einen Messwandler 10, welcher eine elektrisch leitende Verbindung zwischen der ersten und zweiten Leitung 101, 102 der ersten Strombahn herstellt. Ein Temperaturfühler 11 der Temperaturmesseinheit ist auf dem Träger 15 galvanisch getrennt von dem Messwandler 10 angeordnet. Der Temperaturfühler 11 (z.B. Diode) ist derart am Träger 15 angeordnet, dass er eine Temperatur des Messwandlers 10 erfassen kann. Der Temperaturfühler 11 ist mit der Auswerteeinheit 4, welche ebenso auf dem Träger 15 befestigt ist, verbunden, so dass die Auswerteeinheit 4 mittels des Temperaturfühlers 11 die aktuell vorliegende Temperatur des Messwandlers 10 erfassen und auswerten kann.

Die Auswerteeinheit 4 kann somit mittels der erfassten Temperaturen der Temperaturmesseinheit ein zeitliches Erwärmungsverhalten des Messwandlers 10 ermitteln. Durch eine Auswertung des ermittelten zeitlichen Erwärmungsverhaltens des Messwandlers 10 (insbesondere des zeitlichen strombedingten Erwärmungsverhaltens des Messwandlers 10) kann die Auswerteeinheit 4 eine anstehende Überlast am Verbraucher ermitteln.

In den Figuren 2 und 3 umfasst das Trennmittel ein Halteelement 191, eine Feder 192 und ein Scharnier 193. Der Träger 15 ist mittels des Scharniers 193 beweglich gelagert, so dass er vom Messwandler 10 beabstandet werden kann. Zwischen dem Träger 15 und dem Messwandler 10 befindet sich die mit Federkraft beaufschlagte Feder 192. Der Träger 15 wird mittels des Stößels 191 in seiner Normalposition gehalten, so dass mittels der Temperaturmesseinheit und der Auswerteeinheit 4 die ordnungsgemäße Überwachung des der Vorrichtung nachgeschalteten Verbrauchers hinsichtlich einer thermischen Überlast erfolgen kann. Wird durch die Auswerteeinheit 4 eine anstehende Überlast ermittelt, so wird durch dass Trennmittel der Abstand des Messwandlers 10 zum Träger 15 vergrößert. Die FIG 3 zeigt einen derartigen Zustand. Der Träger 15 ist einsseitig vom Messwandler 10 weggeklappt, so dass der Abstand zwischen dem Träger 15 und dem Messwandler 10 vergrößert wurde.

Zur Herstellung des Abstands zwischen dem Träger 15 und dem Messwandler 10 wurde das Halteelement 191 des Trennmittels von der Auswerteeinheit 4 mittelbar oder unmittelbar (z.B. über die Ansteuerung des Schaltschlosses der Vorrichtung) angesteuert, so dass das Halteelement 191 eine Seite des Trägers 15 freigibt. Die mit Federkraft beaufschlagte Feder 192 des Trennmittels bewegt daraufhin den Träger 15 vom Messwandler 10 weg, so dass der Abstand des Messwandlers 10 zum Träger 15 im Bereich der Feder 192 vergrößert wird.

Da das Trennmittel ebenso bei vorliegen eines Kurzschlusses den Abstand zwischen dem Messwandler 10 und dem Träger 15 vergrößert, kann insbesondere der Träger 15 und die auf dem Träger 15 im Bereich des Messwandlers 10 angeordneten Komponenten vor einer thermischen Beschädigung geschützt werden, da im thermisch kritischsten Zustand des Messwandlers 10 seitens des Trägers 15 automatisch ein Sicherheitsabstand hergestellt wird. Ein weiterer großer Vorteil besteht darin, dass durch das Abheben des Trägers 15 vom Messwandler 10 der Messwandler 10 besser und schneller gekühlt wird. Durch diese Materialschonung kann die Funktionsdauer der Vorrichtung verlängert werden.

Es ist ebenso denkbar, dass zur Beabstandung des Messwandlers 10 vom Träger 15 das Trennmittel dezentral zum Messwandler 10 angeordnet ist. Es ist somit ebenso denkbar, dass das Scharnier 193 und die Feder 192 nicht im Bereich des Messwandlers 10 am Träger 15 angeordnet ist, sondern mit anderen Komponenten des elektrischen Schaltgerätes zusammenwirkt, so dass der Abstand zwischen dem Messwandler 10 und dem Träger 15 vergrößert werden kann.

Im Gegensatz zu der Ausführungsform der Figuren 2 und 3 wird in der Ausführungsform der Figuren 4 und 5 der Träger 15 im Überlastfall nicht einseitig vom Messwandler 10 abgehoben, sondern mittels zweier Federn 192 des Trennmittels vollständig vom Träger 15 beabstandet, siehe FIG 5. Die Seitenfläche des Trägers 15, welche dem Messwandler 10 zugewandt ist, ist im Überlastzustand (FIG 5) im Vergleich zum Normalzustand (FIG 4) weiter vom Träger 15 beabstandet.

Grundsätzlich ist es ebenso denkbar, dass der Träger 15 innerhalb der Vorrichtung fix positioniert ist und der Messwandler 10 vom Träger 15 im Überlastfall und/oder Kurzschlussfall einseitig oder vollständig abgehoben wird.

Durch einen Kurzschluss bzw. eine Überlast entsteht im Messwandler 10 eine so große Hitze, so dass unter Umstanden das Trägermaterial des Trägers 15 wie z.B. ein PCB (printed circuit board) geschädigt oder zerstört werden würde. Die Beeinträchtigung kann durch das Nachheizen des Messwandlers 10 in das Trägermaterial verursacht werden. Die ersten Temperaturerhöhungen (Rush- und Anlaufstrom) vom Messwandler 10 durch das Trägermaterial hindurch zur Sensorik (Temperaturfühler 11, Auswerteeinheit 4) sind so schnell, dass hier noch keine Beschädigung hervorgerufen wird. Das Nachheizen über die gesamte Temperatureinwirkzeit jedoch mindert oder schädigt das Trägermaterial bzw. deren Eigenschaften.

Erkennt die Sensorik (Temperaturüberwachungseinrichtung und Auswerteeinheit 4) über die Steilheit der Temperatur-/ Zeitkurve, dass es sich um ein außerplanmäßiges Betriebsverhalten handelt, wird elektronisch oder über einen mechanischen Auslöser, das Schaltschloss der Vorrichtung geöffnet. Das Schaltschloss kann jedoch auch aufgrund einer Überlasterkennung durch den Kurzschlussauslöser oder anderes Organ geöffnet werden.

Mit dem Öffnen des Schaltschlosses wird der Messwandler 10 vom Träger 15 einseitig (FIG 3) oder komplett (FIG 5) abgehoben. Mit dem Abheben des Messwandlers 10 wird das Nachheizen in das Trägermaterial als auch in die Elektronik des Trägers 15 unterbrochen.

Das Herstellen des Abstands vom Träger zum Messwandler 10 durch das Trennmittel kann durch eine zusätzliche zum Schaltschloss vorhandene Mechanik geschehen. Es ist aber ebenso denkbar, dass das Trennmittel Bestandteil des Schaltschlosses selbst ist.

Das Abheben des Trägers 19 vom Messwandler 10 (oder umgekehrt) kann z.B. über Federn 192, einer Vorspannung des Messwandlers 10 selbst oder einer Vorspannung des Trägers 15 selbst geschehen.

Es ist ebenso denkbar, dass das Halten des Abstandes des Trägers 15 zum Messwandler 10 im Normalzustand sowie das Herstellen des vergrößerten Abstandes im Überlastzustand mittels Magnetismus in Verbindung mit mechanischen Komponenten erfolgt (z.B. elektromagnetisches Schaltschloss).

Ferner ist denkbar, dass zur Beabstandung des Messwandlers 10 vom Träger 15 das Trennmittel dezentral zum Messwandler 10 angeordnet ist.

## Patentansprüche

1. Vorrichtung (1) zum Schutz eines Verbrauchers (2) vor einer Überlast, wobei die Vorrichtung (1) eine erste Strombahn, die Teil einer Energieversorgung des Verbrauchers (2) ist, und eine erste und eine zweite Leitung (101,102) umfasst, und eine Überwachungseinrichtung, zur Ermittlung der anstehenden Überlast des elektrischen Verbrauchers (2), umfasst,
**dadurch gekennzeichnet, dass**
die Überwachungseinrichtung eine Temperaturmesseinheit (18), einen Träger (15), eine Auswerteeinheit (4), ein Trennmittel (19) und einen Messwandler (10), welcher eine elektrisch leitende Verbindung zwischen der ersten und zweiten Leitung (101,102) der ersten Strombahn herstellt, umfasst, wobei die Temperaturmesseinheit (18) auf dem Träger (15) galvanisch getrennt von dem Messwandler (10) angeordnet ist und dazu ausgebildet ist eine Temperatur des Messwandlers (10) zu erfassen, wobei die Auswerteeinheit (4) dazu ausgebildet ist, mittels erfasster Temperaturen der Temperaturmesseinheit (18) ein zeitliches Erwärmungsverhalten des Messwandlers (10) zu ermitteln und durch eine Auswertung des ermittelten zeitlichen Erwärmungsverhaltens des Messwandlers (10) eine anstehende Überlast am Verbraucher (2) zu ermitteln, wobei das Trennmittel (19) zu einem Vergrößern des Abstandes des Trägers (15) zum Messwandler (10) bei einer durch die Auswerteeinheit (4) ermittelten anstehenden Überlast des Verbrauchers (1) ausgebildet ist.

2. Vorrichtung (1) nach Anspruch 1, wobei der durch das Trennmittel (19) herbeigeführte Abstand eines Bereichs des Messwandlers (10) zu einem Bereich des Trägers (15) mindestens 0,5 mm beträgt.

3. Vorrichtung (1) nach einem der vorhergehenden Ansprüche, wobei bei einer ermittelten anstehenden Überlast die Auswerteinheit (4) ein Schaltschloss (3) der Vorrichtung (1) betätigt, so dass durch die Betätigung des Schaltschlosses (3) ein Stromfluss über die erste Strombahn unterbunden wird.

4. Vorrichtung (1) nach Anspruch 3, wobei das Schaltschloss (3) mit dem Trennmittel (19) in Wirkverbindung, insbesondere in mechanischer Wirkverbindung, steht, so dass bei einer Betätigung des Schaltschlosses (3) das Trennmittel (19) betätigt wird.

5. Vorrichtung (1) nach einem der vorhergehenden Ansprüche, wobei die Vorrichtung ferner einen Kurzschlussauslöser (103) umfasst, wobei das Trennmittel (19) bei einem Auslösen des Kurzschlussauslösers (103) den Abstand des Messwandlers (10) zum Träger (15) vergrößert.

6. Vorrichtung (1) nach einem der vorhergehenden Ansprüche, wobei die Auswerteeinheit (4) ausgebildet ist, anhand eines Vergleichs des ermittelten Erwärmungsverhaltens des Messwandlers (10) mit einem in der Auswerteeinheit (4) hinterlegten Referenzwert eine anstehende Überlast am Verbraucher (2) zu ermitteln.

7. Vorrichtung (1) nach einem der vorhergehenden Ansprüche, wobei die Temperaturmesseinheit (18) einen ersten Temperaturfühler (11) zum Erfassen der Temperatur des Messwandlers (10) umfasst.

8. Vorrichtung (1) nach Anspruch 7, wobei die Temperaturmesseinheit (18) ferner einen zweiten Temperaturfühler (12) umfasst, der dazu ausgebildet ist, eine Referenztemperatur zu erfassen, wobei die Auswerteeinheit (4) dazu ausgebildet ist, eine anstehende Überlast am Verbraucher (2) mittels erfassten Temperaturen des ersten und zweiten Temperaturfühlers (11,12) zu ermitteln.

9. Vorrichtung (1) nach Anspruch 7 oder 8, wobei die Temperaturmesseinheit (18) einen dritten Temperaturfühler umfasst, die dazu ausgebildet sind, jeweils eine Temperatur des Messwandlers (10) zu erfassen, wobei die Auswerteeinheit (4) dazu ausgebildet ist, anhand der erfassten Temperaturen der Temperaturmesseinheit (18) eine anstehende Überlast am Verbraucher (2) zu ermitteln.

10. Vorrichtung (1) nach einem der vorhergehenden Ansprüche, wobei mindestens ein Temperaturfühler (11,12) der Temperaturmesseinheit (18) maximal 2 mm von dem Messwandler (10) beabstandet ist.

11. Vorrichtung (1) nach einem der vorhergehenden Ansprüche, wobei der Messwandler (10) ein Widerstand mit einer definierten Erwärmungskurve ist.

12. Vorrichtung (1) nach einem der vorhergehenden Ansprüche, wobei die Vorrichtung (1) ein Schaltgerät, insbesondere ein Überlastrelais oder ein Leistungsschalter, ist.

13. Verfahren mit einer Vorrichtung (1) nach einem der Ansprüche 1 bis 12, wobei das Trennmittel (19) aufgrund einer ermittelten anstehenden Überlast den Abstand des Messwandlers (10) zum Träger (15) vergrößert.

14. Verfahren nach Anspruch 13, wobei die Temperaturmesseinheit wiederholt eine Temperatur des Messwandlers (10) erfasst, wobei die Auswerteeinheit (4) mittels der erfassten Temperaturen der Temperaturmesseinheit (18) ein zeitliches Erwärmungsverhalten des Messwandlers (10) ermittelt, wobei die Auswerteeinheit das ermittelte zeitliche Erwärmungsverhalten des Messwandlers (10) auswertet und hieraus eine anstehende Überlast am Verbraucher (2) ermittelt, wobei die Auswerteeinheit (4) aufgrund der ermittelten anstehenden Überlast am Verbraucher (2) daraufhin das Trennmittel (19) betätigt, welches daraufhin den Abstand des Messwandlers (10) zum Träger (15) vergrößert.

## Claims

1. Apparatus (1) for protecting a load (2) against an overload, wherein the apparatus (1) comprises a first current path, which is part of an energy supply for the load (2), and a first and a second line (101, 102), and a monitoring device for determining the imminent overload of the electrical load (2),
**characterised in that**
the monitoring device comprises a temperature measurement unit (18), a carrier (15), an evaluation unit (4), a disconnection means (19) and a measurement transducer (10) which establishes an electrically conductive connection between the first and second line (101, 102) of the first current path, wherein the temperature measurement unit (18) is arranged on the carrier (15) such that it is galvanically disconnected from the measurement transducer (10) and is designed to detect a temperature of the measurement transducer (10), wherein the evaluation unit (4) is designed to determine a heating behaviour of the measurement transducer (10) over time by means of detected temperatures of the temperature measurement unit (18) and to determine an imminent overload on the load (2) by evaluating the determined heating behaviour of the measurement transducer (10) over time, wherein the disconnection means (19) is designed to increase the distance between the carrier (15) and the measurement transducer (10) in the event of an imminent overload of the load (1) determined by the evaluation unit (4).

2. Apparatus (1) according to claim 1, wherein the distance brought about by the disconnection means (19) between a region of the measurement transducer (10) and a region of the carrier (15) is at least 0.5 mm.

3. Apparatus (1) according to one of the preceding claims, wherein in the event of a determined imminent overload the electronic evaluation unit (4) actuates a latching mechanism (3) of the apparatus (1), such that by the actuation of the latching mechanism (3) a current flow across the first current path is inhibited.

4. Apparatus (1) according to claim 3, wherein the latching mechanism (3) is in operative connection, in particular in mechanical operative connection, with the disconnection means (19), such that in the event of an actuation of the latching mechanism (3), the disconnection means (19) is actuated.

5. Apparatus (1) according to one of the preceding claims, wherein the apparatus further comprises a short-circuit trip (103), wherein in the event of the short-circuit trip (103) being tripped the disconnection means (19) increases the distance between the measurement transducer (10) and the carrier (15).

6. Apparatus (1) according to one of the preceding claims, wherein the evaluation unit (4) is designed, on the basis of a comparison of the determined heating behaviour of the measurement transducer (10) with a reference value stored in the evaluation unit (4), to determine an imminent overload on the load (2).

7. Apparatus (1) according to one of the preceding claims, wherein the temperature measurement unit (18) comprises a first temperature sensor (11) for detecting the temperature of the measurement transducer (10).

8. Apparatus (1) according to claim 7, wherein the temperature measurement unit (18) further comprises a second temperature sensor (12), which is designed to detect a reference temperature, wherein the evaluation unit (4) is designed to detect an imminent overload on the load (2) by means of detected temperatures of the first and second temperature sensor (11, 12).

9. Apparatus (1) according to claim 7 or 8, wherein the temperature measurement unit (18) comprises a third temperature sensor which is designed to detect a temperature of the measurement transducer (10) in each case, wherein the evaluation unit (4) is designed, on the basis of the detected temperatures of the temperature measurement unit (18), to determine an imminent overload on the load (2).

10. Apparatus (1) according to one of the preceding claims, wherein at least one temperature sensor (11, 12) of the temperature measurement unit (18) is a maximum distance of 2 mm away from the measurement transducer (10).

11. Apparatus (1) according to one of the preceding claims, wherein the measurement transducer (10) is a resistor with a defined heating curve.

12. Apparatus (1) according to one of the preceding claims, wherein the apparatus (1) is a switching device, in particular an overload relay or a circuit breaker.

13. Method having an apparatus (1) according to one of claims 1 to 12, wherein the disconnection means (19) increases the distance between the measurement transducer (10) and the carrier (15) by virtue of an imminent overload being determined.

14. Method according to claim 13, wherein the temperature measurement unit repeatedly detects a temperature of the measurement transducer (10), wherein the evaluation unit (4) determines a heating behaviour of the measurement transducer (10) over time by means of the detected temperatures of the temperature measurement unit (18), wherein the evaluation unit evaluates the determined heating behaviour of the measurement transducer (10) over time and from this determines an imminent overload on the load (2), wherein the evaluation unit (4) then, by virtue of the determined imminent overload on the load (2), actuates the disconnection means (19), which then increases the distance between the measurement transducer (10) and the carrier (15).

## Revendications

1. Dispositif (1) de protection d'un consommateur (2) vis-à-vis d'une surcharge, le dispositif (1) comprenant une première voie de courant, qui fait partie d'une alimentation en courant du consommateur (2), et une première et une deuxième lignes (101, 102) et comprenant un dispositif de contrôle pour la détermination de la surcharge imminente du consommateur (2) électrique,
**caractérisé en ce que**
le dispositif de contrôle comprend une unité (18) de mesure de la température, un support (15), une unité (4) d'exploitation, un moyen (19) de séparation et un transducteur (100) de mesure, qui ménage une liaison conductrice de l'électricité entre la première et la deuxième lignes (101, 102) de la première voie de courant, l'unité (18) de mesure de la température étant montée sur le support (15) en étant séparée galvaniquement du transducteur (10) de mesure et étant constituée pour détecter une température du transducteur (10) de mesure, l'unité (4) d'exploitation étant constituée pour déterminer, à l'aide des températures détectées par l'unité (18) de mesure de la température, un comportement d'échauffement en fonction du temps du transducteur (10) de mesure et, par une exploitation du comportement d'échauffement en fonction du temps qui a été déterminé du transducteur (10) de mesure, pour déterminer une surcharge imminente du consommateur (2), le moyen (19) de séparation étant constitué pour agrandir la distance du support (15) au transducteur (10) de mesure, lors d'une surcharge imminente du consommateur (1) déterminée par l'unité (4) d'exploitation.

2. Dispositif (1) suivant la revendication 1, dans lequel la distance, provoquée par le moyen (19) de séparation, d'une partie du transducteur (10) de mesure à une partie du support (15) est d'au moins 0,5 mm.

3. Dispositif (1) suivant l'une des revendications précédentes, dans lequel, si une surcharge imminente est déterminée, l'unité (4) d'exploitation actionne un verrou (3) de commutation du dispositif (1), de manière à supprimer, par l'actionnement du verrou (3) de commutation, un flux de courant dans la première voie de courant.

4. Dispositif (1) suivant la revendication 3, dans lequel le verrou (3) de commutation est en liaison active avec le moyen (19) de séparation, notamment en liaison active mécanique, de manière, si le verrou (3) de commutation est actionné, à actionner le moyen (9) de séparation.

5. Dispositif (1) suivant l'une des revendications précédentes, dans lequel le dispositif comprend, en outre, un déclencheur (103) de court-circuit, dans lequel le moyen (19) de séparation agrandit la distance du transducteur (10) de mesure au support (15), s'il se produit un déclenchement du déclencheur (103) de court-circuit.

6. Dispositif (1) suivant l'une des revendications précédentes, dans lequel l'unité (4) d'exploitation est constituée pour, à l'aide de la comparaison du comportement d'échauffement déterminé du transducteur (10) de mesure à une valeur de référence mémorisée dans l'unité (4) d'exploitation, déterminer une surcharge imminente du consommateur (2).

7. Dispositif (1) suivant l'une des revendications précédentes, dans lequel l'unité (18) de mesure de la température comprend une première sonde (11) de température pour la détection de la température du transducteur (10) de mesure.

8. Dispositif (1) suivant la revendication 7, dans lequel l'unité (18) de mesure de la température comprend, en outre, une deuxième sonde (12) de température constituée pour détecter une température de référence, l'unité (4) d'exploitation étant constituée pour déterminer une surcharge imminente du consommateur (2) au moyen des températures détectées par les première et deuxième sondes (11, 12) de température.

9. Dispositif (1) suivant la revendication 7 ou 8, dans lequel l'unité (18) de mesure de la température comprend une troisième sonde de température, qui sont constituées pour détecter respectivement une température du transducteur (10) de mesure, l'unité (4) d'exploitation étant constituée pour, à l'aide des températures détectées par l'unité (18) de mesure de la température, déterminer une surcharge imminente du consommateur (2).

10. Dispositif (1) suivant l'une des revendications précédentes, dans lequel au moins une sonde (11, 12) de température de l'unité (18) de mesure de la température est à une distance au maximum de 2 mm du transducteur (10) de mesure.

11. Dispositif (1) suivant l'une des revendications précédentes, dans lequel le transducteur (10) de mesure est une résistance ayant une courbe d'échauffement définie.

12. Dispositif (1) suivant l'une des revendications précédentes, dans lequel le dispositif (1) est un appareil de coupure, notamment un relais en cas de surcharge ou un disjoncteur.

13. Procédé s'effectuant par un dispositif (1) suivant l'une des revendications 1 à 12, dans lequel le moyen (19) de séparation agrandit, sur la base d'une surcharge imminente qui a été déterminée, la distance du transducteur (10) de mesure au support (15).

14. Procédé suivant la revendication 13, dans lequel l'unité de mesure de la température détecte, de manière répétée, une température du transducteur (10) de mesure, l'unité (4) d'exploitation déterminant, au moyen des températures détectées par l'unité (18) de mesure de la température, un comportement d'échauffement en fonction du temps du transducteur (10) de mesure, l'unité d'exploitation exploitant le comportement d'échauffement en fonction du temps qui a été déterminé du transducteur (10) de mesure et en déterminant une surcharge imminente du consommateur (2), l'unité (4) d'exploitation actionnant, sur la base de la surcharge imminente déterminée du consommateur (2), le moyen (19) de séparation, qui agrandit ensuite la distance du transducteur (10) de mesure au support (15).
